# EUROPEAN PATENT APPLICATION

(11) **EP 0 879 637 A2**
(43) Date of publication of application: **25.11.1998**
(21) Application number: 98201673.5
(22) Date of filing: 20.05.1998
(51) Int. Cl.: B01F 7/02, G01N 1/44

(54) **Method and device for treating a small quantity of a product**

(30) Priority: 22.05.1997 BE 9700445
(71) Applicant: PRO-C-EPT, naamloze vennootschap, 8300 Knokke-Heist (BE)
(72) Inventor: de Wit, Marc, 8300 Knokke-Heist (BE)
(74) Representative: Donné, Eddy

(57) **Abstract**

Method for treating a small quantity of a product, whereby this product (12) is processed in a receptacle (4) by means of stirring means (5) or the like, whereby the processing thereby performed is optimized by the application of one or the combination of two or more of the following three techniques:
- the treatment of the product (12) by providing it in a small transparent receptacle (4), by providing the product (12) present in the receptacle (4) in a microwave oven (2), and by processing the product (12) by means of the aforementioned stirring means (5) and/or the like, whereby the stirring means (5) cooperate with the receptacle (4) through the wall (6) of the microwave oven (2);
- the treatment of the product (12) by providing it in a small transparent receptacle (4) and subjecting it to a high shear processing;
- the treatment of the product (12) by providing it in a small receptacle (4) and subjecting it to a high shear processing, while supplying microwaves (8), whereby stirring means and the like are applied which, at least partially, consist of synthetic material.

## Description

This invention relates to a method and a device for treating a small quantity of a product.

In the first place, the invention is intended for granulating products.

More generally, however, can the method and device according to the invention also be used in other applications, for example, for homogenizing products, for example, salves and the like, for letting reactions take place, and so on.

Hereby, the invention mainly aims at a method which is optimized to such an extent that it becomes especially suited for processing products at laboratory scale.

To this aim, the invention provides a method for treating a small quantity of a product, whereby this product is processed in a receptacle by means of stirring means and/or the like, characterized in that the processing which is thereby performed is optimized by the application of one or the combination of two or more of the following three techniques:
- the treatment of the product by providing it in a relatively small, substantially transparent receptacle, by providing the product present in the receptacle together with this receptacle in a microwave oven, and by processing the product by means of the aforementioned stirring means and/or the like and by means of possible other elements, whereby the stirring means cooperate with the receptacle through the wall of the microwave oven;
- the treatment of the product by providing it in a relatively small, substantially transparent receptacle and subjecting it to a so-called high shear processing, in other words, a processing whereby high shearing forces are created in the product;
- the treatment of the product by providing it in a relatively small, substantially transparent receptacle and subjecting it to a so-called high shear processing, in other words, a processing whereby high shearing forces are created in the product, with the supply of microwaves, whereby stirring means and possible other elements are applied which, at least partially, consist of synthetic material.

The first technique, more particularly the fact that the receptacle is placed in a microwave oven, offers the advantage that, contrary to the forms of embodiment known up to now, whereby the microwaves are led into the receptacle through a microwave channel, the product can easily be brought into the receptacle and removed therefrom, all that due to the fact that at the receptacle itself no connection for a microwave channel is present. Another advantage consists in that the receptacle can be small, as no microwave supply channel which in itself, as known, has a relatively large section, must be connected thereto, as a result of which the whole can fulfil laboratory requirements. Another advantage consists in that the microwaves are distributed very equally over the entire receptacle. Another important advantage consists in that, in the case that the microwave oven has a transparent door or wall, the condition of the product can be followed up during processing, through the transparent door of the microwave oven and through the transparent wall of the receptacle, which is particularly useful in the case of granulating a product.

The aforementioned second technique also offers as an advantage that the condition of the product can be followed up very good. The fact that a small receptacle is used also has as an advantage that it is possible to work with very small tolerances, as a result of which it is possible to let the stirring means rotate very narrowly alongside the wall of the receptacle, as a result of which no product can adhere to the wall and consequently the treatment process, for example, a granulation process, can be followed up at any moment.

Besides a number of the already mentioned advantages, the aforementioned third technique further offers the advantage that, by limiting metal parts, the creation of large concentrations of microwaves is avoided, as a result of which the ionization of the medium and the burning of the product are excluded. Moreover, by the application of synthetic material, capacity densities can be applied which, per volume unit, can be up to ten times higher than in traditional microwave processors.

In the most preferred form of embodiment, use is made of a glass pot for the aforementioned receptacle.

Preferably, this glass pot has a diameter of less than 30 centimeters and even better less than 20 centimeters.

In the case that the method is applied for granulating and/or homogenizing of a product, for the stirring means use shall be made of a stirring arm which creates a vortex movement in the receptacle and, moreover, a so-called chopper shall also be provided.

Secondly, the invention also relates to a device for realizing the aforementioned method which allows to realize at least one of the aforementioned techniques and which, to this aim, is characterized in that it at least consists in the combination of a microwave oven, preferably, but not necessarily, with a transparent door and/or wall; a substantially transparent receptacle which can be provided in the microwave oven; and stirring means which can cooperate through the wall of the microwave oven with the receptacle provided in this microwave oven.

Preferably, the stirring means cooperate with the upper wall of the microwave oven and the device is provided with means for attaching the receptacle against the underside of the upper wall of the microwave oven, in such a manner that the upper wall works as a closure. As a consequence, the receptacle can be installed very easily and, after the treatment has been performed, also easily be removed, without the necessity of hereby realizing and again removing a plurality of connections.

The invention also relates to a device for realizing the aforementioned method which allows to realize at least one of the aforementioned techniques and which, to this aim, is characterized in that it consists at least of a support construction having a wall which is fixed at a well-defined height; a substantially transparent receptacle; means for attaching the receptacle against the underside of the wall; and stirring means and/or the like which can cooperate through the wall with the receptacle attached under this wall. This embodiment allows to perform treatments without a microwave process.

Hereby, the aforementioned support construction preferably consists of a horizontal plate on feet, with the advantage that the receptacle, and the product which is present therein, can be viewed along the periphery from all sides.

The means for attaching the receptacle against the underside of the wall, the upper wall respectively, are preferably formed by a coupling with which the receptacle can be tightened against the aforementioned underside, in such a manner that the aforementioned wall at the same time serves as a cover for the receptacle.

Finally, the invention also relates to a device, also for realizing the aforementioned method, which allows to realize at least one of the aforementioned techniques of this method, with as a characteristic that it at least consists in the combination of a relatively small receptacle, with a diameter which is smaller than 30 centimeters and, even better, smaller than 20 centimeters; means for performing a so-called high shear processing on the product, which means substantially consist of stirring means and a so-called chopper, whereby these means at least partially consist of synthetic material; and means for subjecting the product during the aforementioned processing also to a treatment by means of microwaves. Preferably, the stirring means and the chopper shall have a metal shaft, but a stirring arm and knives made of synthetic material. The metal shafts guarantee for a construction which is very solid, even with higher rotational speeds, whereas the stirring arm and knives made of synthetic material offer the aforementioned advantage that a larger supply of energy is possible, whereas, however, the risk of ionisation is reduced to a minimum, if is not non-existent.

With the intention of better showing the characteristics according to the invention, hereafter, as examples without any limitative character, several preferred forms of embodiments are described, with reference to the accompanying drawings, wherein:
figure 1 schematically represents a device according to the invention;
figure 2, at a larger scale, represents the part which is indicated by F2 in figure 1;
figure 3, in perspective, represents the part which is indicated by arrow F3 in figure 2,
figure 4 represents another device according to the invention.

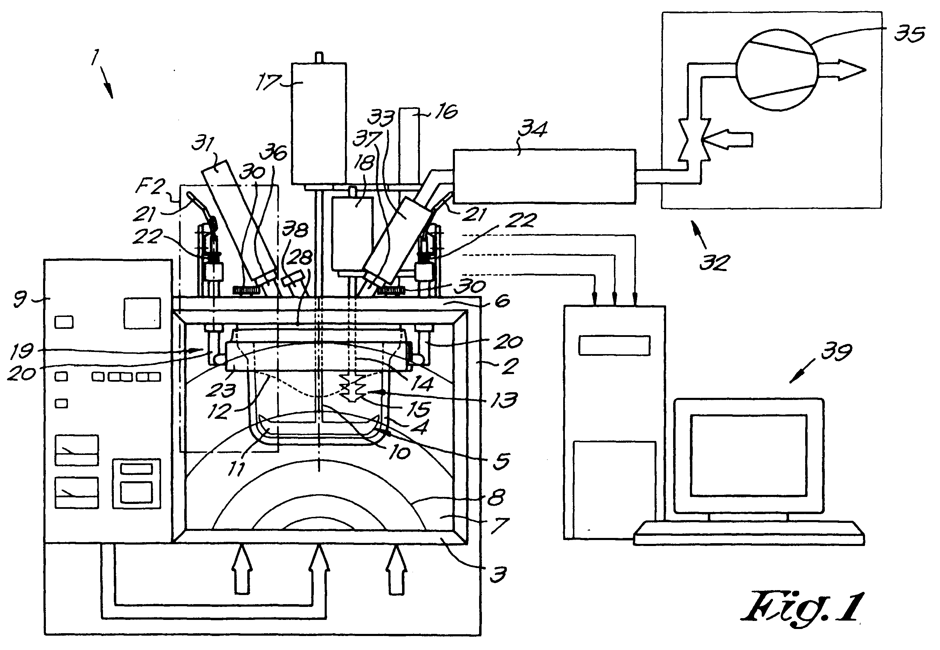

The device 1 from figure 1 substantially consists in the combination of a microwave oven 2, with a preferably transparent, for example, glass, door 3; a substantially transparent receptacle 4, more particularly a cylindrical glass pot, which can be brought into the microwave oven 2; and stirring means 5 and the like which, through the wall, more particularly the upper wall 6, of the microwave oven 2, can cooperate with the receptacle 4 provided in this microwave oven 2.

In the microwave oven 2, more particularly in the oven space 7, microwaves 8 can be created by means of a microwave generator 9, whereby these microwaves 8 preferably are led along the underside into the oven space 7. It is, however, clear that according to a variant the microwaves can be brought into the oven space 7 also from the sides or from the rear wall.

In the represented example, the stirring means 5 consist of a stirring element which in itself consists of a stirring arm 11, provided on a shaft 10. In the case that the device 1 is intended for granulating powders, this is a stirring arm which extends almost over the complete diameter of the receptacle 4, and which is designed such that a vortex movement in the product 12 to be processed is created.

It is noted that, in the case of a dryer and/or homogenizer instead of a granulator, the stirring arm consists of an especially designed mixing arm which extends at one side along the wall of the receptacle upward, thereby mixing the product, and which, at the other side, has a part which compacts the product against the bottom and thereby allows to break clots. Instead of the chopper also mentioned hereafter, in such case an additional clot breaker can be applied.

In the represented example, the device is also provided with a so-called chopper 13 which consists of a shaft 14, which also passes through the upper wall 6, and cut-off and/or cutting elements 15 provided on the shaft 41, in the form of relatively short fins which function as knives.

The driving means for the stirring means 5, as well as for the chopper 13, are mounted on top of the wall 6, in other words, on top of the microwave oven, as represented, possibly by means of a support 16. These driving means consist respectively of an electric motor 17 with which the stirring arm 11 can be driven with, for example, a speed up to 1500 revolutions per minute, and an electric motor 18 with which the chopper 13 can be driven with, for example, up to 4200 revolutions per minute.

The fixation with the support 16 allows that the motors 17-18 can be rapidly uncoupled and be turned aside.

The receptacle 4 is attached against the upper wall 6 of the microwave oven 2, by means of suitable means 19 which are formed by a coupling with which the receptacle 4 can be tightened against the underside of the upper wall 6.

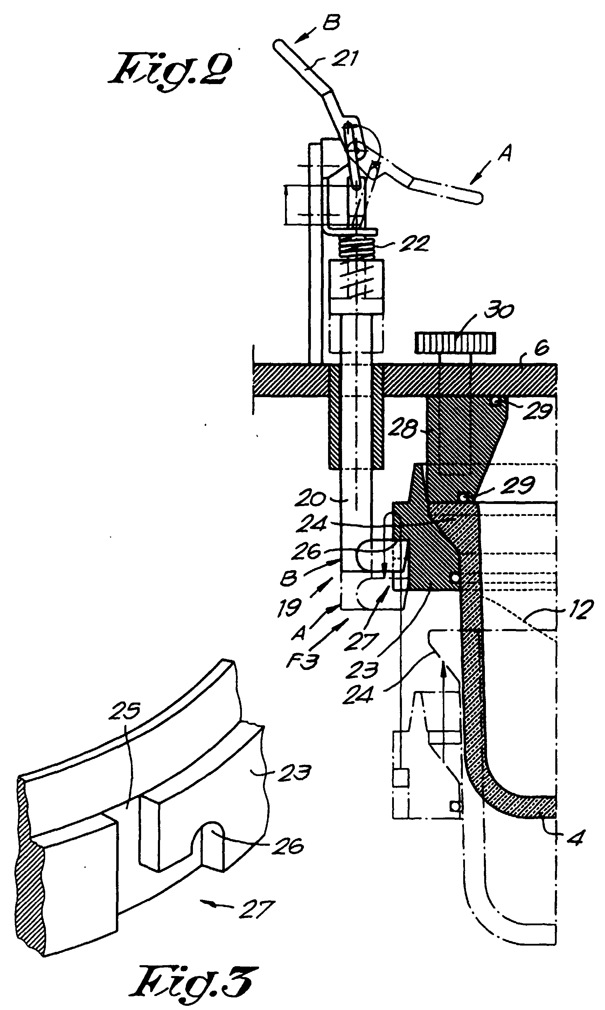

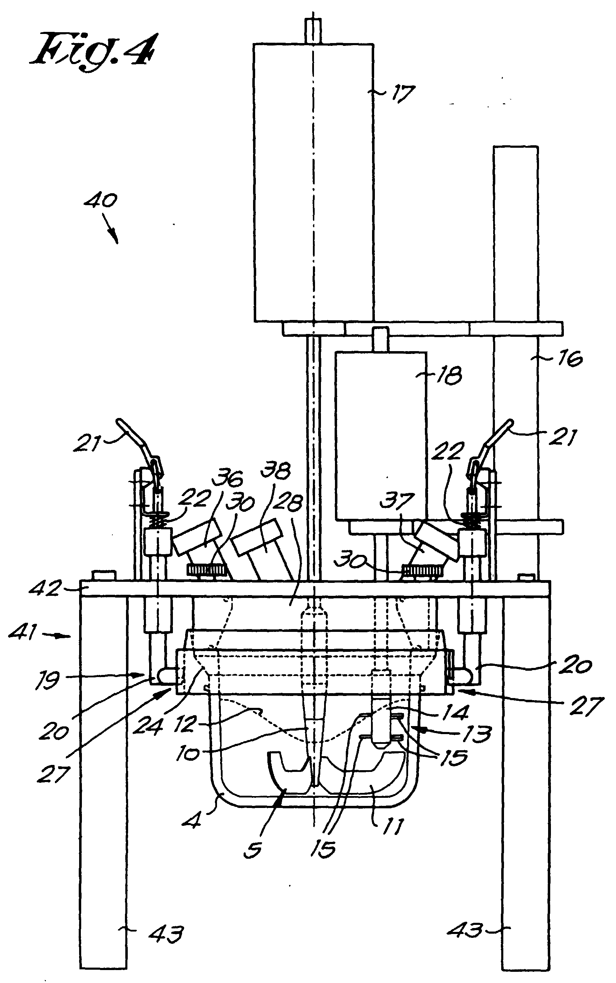

As represented in greater detail in figures 2 and 3, this coupling preferably uses a tightening system with hook-shaped elements 20 which extend through the aformentioned upper wall 6, in such a manner that the receptacle 4 can be suspended at these hook-shaped elements 20, whose number preferably is two. Hereby, the hook-shaped elements 20 are provided with operation elements 21 in the shape of levers with which the hook-shaped elements 20 can be moved upward and tightened. According to a not represented variant, excenters are applied instead of levers. The movement from a position A to a position B takes place against the force of springs 22. In the tightened position B, the levers are just moved over a dead point, such that a locking is guaranteed, even if the operation elements 21 are released.

The suspension of the receptacle 4 takes place by means of a ring 23 which can be slid over the receptacle 4 from beneath up against a collar 24 situated at the top side of the receptacle 4. Hereby, the ring 23, as represented in figure 4, is provided with passages 25 and seats 26 which together form a kind of bajonet system 27, in such a manner that the receptacle 4, by means of the ring 23, can be suspended over the hook-shaped elements 20 and subsequently can be tightened upward.

Between the upper wall 6 and the upper edge of the receptacle 4, an intermediate ring 28 is provided, with seals 29 which guarantee for a sealing, more particular an airtight sealing. This intermediate ring 28 is fixed against the upper wall 6 by means of screws 30. This allows vacuum and pressure processing.

Furthermore, the device 1 can be equipped with a number of accessories, depending from the purpose for which it shall be applied. In the example of figure 1, the device 1, for example, is provided with a temperature meter 31 and provided with a vacuum suction system 32 with a filter 33, a condensor 34 and a vacuum pump 35.

The connection of the temperature meter 31 and the vacuum suction system 32 takes place by means of connection pieces 36-37 mounted in the upper wall 6. Of course, still other connection pieces, for example 38, can be provided for other accessories, such as a pressure supply or a liquid supply. Further, the device 1 can also be equipped with accessories which do not cooperate directly with the inside of the mounted receptacle. So, for example, a convection cooling and/or heating system can be provided, for example, by blowing cold or hot air into the oven space 7 or by using a double-walled glass receptacle 4 in between which a cooling medium or heating medium may flow.

The working and use of the device can easily be deduced from the figures and, of course, also depends on the treatment to be performed.

In the case of classical granulation, one proceeds as follows.

First, the product 12 to be granulated is brought into the receptacle 4. Subsequently, the ring 23 is slid from beneath over the receptacle 4 and this ring 23, together with the receptacle 4, is suspended at the hook-shaped elements 20 which, at that moment, are situated in their lowest position A. By subsequently tightening the tightening systems 21, the receptacle 4 is drawn against the intermediate ring 28, which results in an airtight sealing.

By switching on the stirring means 5 and the chopper 13, the product 12 is granulated in a known manner. By switching on the microwave generator 9, the product 12 is heated and dried at the same time. Hereby, the moisture is sucked off by means of the vacuum suction system 32.

It is obvious that hereby all advantages mentioned in the introduction will be enhanced.

The results of various measurements performed thereby, for example, of the temperature, the moisture contents, the resistance to which the stirring means 5 are subject, and the like, can possibly be registered and/or followed up by means of a computerized system 39.

In figure 2, another device 40 according to the invention is represented. This device 40 differs from the device 1 by the fact that it does not use a microwave oven 2. Instead of the aforementioned upper wall 6, hereby use is made of a support construction 41 with a wall 42, fixed at a well-defined height, at which the means 19 for the fixation of the receptacle 4 are attached.

Hereby, the support construction 41 substantially consists of a horizontal plate forming the aforementioned wall 42 which is placed on feet 43, for example, four feet, as a result of which the product 12 can easily be viewed all around from all sides.

According to another form of embodiment which is not represented in the figures, the aforementioned support construction 41 shall be replaced by an element in the form of a cover which carries, for example, the support 16 with the elements connected thereto. This cover can then be carried by the receptacle 4, which simply is put down, or can be movably attached to a support, either hingeable or movable up and down. Hereby, the receptacle can be clamped between a support present thereunder and the element present thereabove.

The present invention is in no way limited to the forms of embodiment described by way of example and represented in the figures, on the contrary may such method and device for treating a small quantity of a product be realized according to various variants without leaving the scope of the invention.

## Claims

1. Method for treating a small quantity of a product, whereby this product (12) is processed in a receptacle (4) by means of stirring means (5) and/or the like, characterized in that the processing which is thereby performed is optimized by the application of one or the combination of two or more of the following three techniques:
- the treatment of the product (12) by providing it in a relatively small, substantially transparent receptacle (4), by providing the product (12) present in the receptacle (4) together with this receptacle (4) in a microwave oven (2), and by processing the product (12) by means of the aforementioned stirring means (5) and/or the like and by means of possible other elements, whereby the stirring means (5) cooperate with the receptacle (4) through the wall (6) of the microwave oven (2);
- the treatment of the product (12) by providing it in a relatively small, substantially transparent receptacle (4) and subjecting it to a so-called high shear processing, in other words, a processing whereby high shearing forces are created in the product (12);
- the treatment of the product (12) by providing it in a relatively small, substantially transparent receptacle (4) and subjecting it to a so-called high shear processing, in other words, a processing whereby high shearing forces are created in the product (12), with the supply of microwaves (8), whereby stirring means (5) and possible other elements are applied which, at least partially, consist of synthetic material.

2. Method according to claim 1, characterized in that it is applied for the granulation of the products (12).

3. Method according to claim 1, characterized in that it is applied for the homogenization of products (12) or letting products react.

4. Method according to any of the preceding claims, characterized in that for the receptacle (4), use is made of a glass pot.

5. Method according to any of the preceding claims, characterized in that for the stirring means (5), use is made of a stirring arm (11) which creates a vortex movement in the receptacle (4) and that, apart thereof, at the same time a so-called chopper (13) is provided.

6. Device for realizing the method of one or more of the aforementioned claims, which allows to realize at least one of the aforementioned techniques, characterized in that it substantially consists in the combination of a microwave oven (2); a substantially transparent receptacle (4) which can be installed in the microwave oven (2); and stirring means (5) which, through the wall (6) of the microwave oven (2), can cooperate with the receptacle (4) installed in said microwave oven (2).

7. Device according to claim 6, characterized in that the stirring means (5) cooperate with the receptacle (4) by means of the upper wall (6) of the microwave oven (2) and that the device (1) is provided with means (19) for attaching the receptacle (4) against the underside of the upper wall (6) of the microwave oven (2), in such a manner that the upper wall (6) works as a closure.

8. Device for realizing the method of one or more of the claims 1 to 5, which allows to realize at least one of the aforementioned techniques, characterized in that it substantially consists of a support construction (41) which comprises a wall (42) fixed at a well-defined height; a substantially transparent receptacle (4); means (19) for fixing the receptacle (4) against the underside of the wall (42); and stirring means (5) and/or the like which, through the wall (42), can cooperate with the receptacle (4) fixed beneath this wall (42).

9. Device according to claim 8, characterized in that the aforementioned support construction (41) substantially consists of a horizontal plate (42) on feet (43).

10. Device according to any of the claims 7, 8 or 9, characterized in that the means (19) for attaching the receptacle (4) against the underside of the wall (42), the upper wall (6) respectively, are formed by a coupling with which the receptacle (4) can be brought, tightened respectively, against the aforementioned underside.

11. Device according to claim 10, characterized in that the aforementioned coupling is provided with one or more of the following elements:
- a tightening system with hook-shaped elements (20) which extend through the aforementioned wall (42), upper wall (6) respectively, at which the receptacle (4) can be suspended, and which is provided with operating elements (21), preferably in the form of levers, with which the hook-shaped elements (20) can be tightened upwards;
- a suspension by means of a bajonet system (27);
- a ring (23) wherein the receptacle (4) is suspended, whereby this ring (23) can be slid from beneath over the receptacle (4) up to a collar (24) situated at the top side of the receptacle (4);
- an intermediate ring (28) with seals (29) which guarantee for a sealing.

12. Device according to any of the claims 7 to 11, characterized in that the necessary driving means (17-18) for the stirring means (5) and/or for other elements, such as a chopper (13), homogenizer and/or clot breaker, are mounted on top of the aforementioned wall (6-42).

13. Device according to any of the claims 6 to 12, characterized in that the receptacle (4) consists of a glass pot.

14. Device according to any of the claims 6 to 13, characterized in that the receptacle (4) has a diameter of less than 30 centimeters.

15. Device according to any of the claims 6 to 14, characterized in that the receptacle (4) has a diameter of less than 20 centimeters.

16. Device according to any of the claims 6 to 15, characterized in that it is provided with one or more of the following accessories: a temperature meter (31); a liquid supply; a vacuum suction system (32); a pressure supply; and a convection cooling and/or heating system.

17. Device for realizing the method of one or more of the claims 1 to 5, which allows to realize at least one of the aforementioned techniques, characterized in that it substantially consists in the combination of a relatively small receptacle (4), with a diameter which is smaller than 30 centimeters and even better is smaller than 20 centimeters; means for performing a high shear processing on the product (12) which substantially consist of stirring means (5) and a so-called chopper (13), whereby these means, at least partially, consist of synthetic material; and means for subjecting the product (12) during the aforementioned processing also to a treatment by means of microwaves (8).

18. Device according to claim 17, characterized in that the stirring means (5) and the chopper (13) have a metal shaft (10-14), however, a stirring arm (11) and knives (15) made of synthetic material.

19. Device according to claim 8, either or not combined with one or more of the characteristics described in the claims 12 to 16, characterized in that the support construction (42) is replaced by an element in the form of a cover for the receptacle (4) which possibly is carried by the receptacle (4) itself.
